# DEMANDE DE BREVET EUROPEEN

(11) **EP 3 223 584 A1**
(43) Date de publication de la demande: **27.09.2017**
(21) Numéro de dépôt: 17160961.3
(22) Date de dépôt: 14.03.2017
(51) Int. Cl.: H05B 1/02, H05B 3/54, B60S 1/38

(54) **CIRCUIT ÉLECTRIQUE CHAUFFANT ET ÉLÉMENT CHAUFFANT POUR BALAI D'ESSUIE-GLACE, PROCÉDÉ DE RÉALISATION D'UN ÉLÉMENT CHAUFFANT, ET BALAI D ESSUIE-GLACE**

(30) Priorité: 21.03.2016 FR 1652400
(71) Demandeur: Valeo Systèmes d'Essuyage, 78322 Le Mesnil Saint Denis (FR)
(72) Inventeur: CAILLOT, Gérald, 78322 La Verrière (FR); JARASSON, Jean-Michel, 78322 La Verrière (FR); IZABEL, Vincent, 78322 La Verrière (FR); DERREPAS, Clementine, 93012 Bobigny (FR)
(74) Mandataire: Callu Danseux, Violaine

(57) **Abrégé**

L'invention propose un élément chauffant 30 intégrant un circuit électrique chauffant, pour un balai d'essuie-glace d'un véhicule automobile, comportant au moins un élément résistif chauffant (36) qui est relié à des bornes (40) d'alimentation électrique de l'élément chauffant, caractérisé en ce que au moins un élément résistif chauffant est un élément résistif CTP (36) réalisé au moyen d'une encre résistive à Coefficient de Température Positif.

## Description

### DOMAINE TECHNIQUE DE L'INVENTION

L'invention concerne un circuit électrique chauffant pour un balai d'essuie-glace d'un véhicule.

L'invention concerne aussi un élément électrique chauffant comportant un circuit électrique chauffant, un balai d'essuie-glace comportant un élément chauffant, et un procédé de fabrication d'un élément électrique chauffant.

### ARRIERE PLAN TECHNIQUE DE L'INVENTION

De manière connue, on peut chauffer un balai d'essuie-glace de véhicule automobile, notamment pour le dégivrer en hiver ou pour utiliser la chaleur produite par les moyens de chauffage pour dégivrer aussi la surface extérieure de la vitre dont l'essuie-glace doit assurer le nettoyage.

Lorsque le balai d'essuie-glace comporte des canaux internes de distribution d'un liquide de lave-glace, le chauffage du balai d'essuie-glace peut en outre permettre de chauffer le liquide de lave-glace avant sa pulvérisation ou projection sur la surface extérieure de la vitre, ce qui permet aussi de faciliter les opérations de dégivrage de la vitre et peut éventuellement permettre d'éviter l'utilisation d'une raclette à usage manuel.

De manière connue, un balai d'essuie-glace du type « balai plat » comporte un corps d'orientation longitudinale qui porte une lame d'essuyage, réalisée en général en caoutchouc naturel ou synthétique, qui est destinée à frotter contre la surface extérieure de la vitre à essuyer, par exemple d'un pare-brise de véhicule, pour en évacuer de l'eau en amenant cette eau en dehors du champ de vision du conducteur.

Un tel type de balai d'essuie-glace comporte aussi au moins une vertèbre longitudinale qui confère à la lame d'essuyage un cintrage de manière à favoriser l'application de la lame d'essuyage sur la surface extérieure de la vitre.

Le balai d'essuie-glace est porté par un bras d'essuie-glace ou bras d'entraînement qui est entraîné dans un mouvement alternatif par un moteur électrique d'entraînement.

Les moyens de liaison du balai d'essuie-glace au bras d'entraînement peuvent comporter un connecteur qui est rendu solidaire du corps longitudinal, et un adaptateur qui est monté articulé sur le corps longitudinal et qui est fixé à une extrémité libre du bras.

De manière connue, les moyens de chauffage font appel à un circuit électrique chauffant qui comporte au moins une résistance électrique de chauffage qui, lorsqu'elle est alimentée en courant électrique, produit de la chaleur qui est dissipée dans son environnement.

Par exemple, on a déjà proposé d'équiper la vertèbre de cintrage d'un balai d'essuie-glace avec des moyens de chauffage se présentant sous la forme d'un film rapporté qui est collé sur au moins une des deux faces planes opposées de la vertèbre, et qui comporte un circuit électrique chauffant.

Le circuit électrique chauffant est par exemple une boucle d'un fil électrique conducteur de l'électricité dont les extrémités sont reliées à des bornes d'alimentation électrique.

Dans le cas d'un véhicule dit de haut de gamme, le pilotage et la protection de la fonction de chauffage d'un balai d'essuie-glace se fait généralement directement au moyen de l'électronique et du circuit électrique du véhicule.

La fonction de pilotage du chauffage nécessite dans ce cas une intégration lors de la définition générale de l'architecture électrique du véhicule et elle engendre de ce fait un certain coût.

Dans le cas d'un véhicule dit de gamme moyenne ou inférieure, le constructeur peut ne pas souhaiter modifier l'architecture du véhicule et il demande alors une possibilité d'intégration de la fonction de pilotage et de la protection directement dans le balai d'essuie-glace chauffant.

On peut aussi vouloir équiper un véhicule existant d'une fonction de chauffage des balais d'essuie-glace, alors que le véhicule a été conçu et commercialisé sans une telle fonction et qu'il ne comporte donc aucun moyen de pilotage de la fonction de chauffage.

Ainsi, les autres fonctions du véhicule ne sont pas affectées en mode dégradé de la fonction, par exemple en cas de fourniture d'une mauvaise information par un capteur de la température extérieure ou de la vitesse de déplacement du véhicule, ou bien en cas de défaillance d'un tel capteur.

De manière connue, la fonction chauffage se déclenche en général pour une température extérieure inférieure à 5°C, pour assurer un dégivrage global du balai d'essuie-glace, que ce soit le dégivrage des canaux de distribution, des moyens de liaison du balai d'essuie-glace au bras d'essuie-glace, voire de la lame d'essuyage en contact avec la surface extérieure de la vitre.

Dans un mode dégradé, par exemple en cas de défaillance d'un capteur de la température extérieure ou de la vitesse du véhicule qui fournirait une information selon laquelle le véhicule est en mouvement alors que le véhicule est fixe à l'arrêt, le risque est un chauffage permanent du balai d'essuie-glace au-delà d'une température de 5°C, par exemple en plein été avec des températures ambiantes supérieures à 30°C.

Dans une telle situation, on peut aboutir à la formation d'un point chaud, d'un court-circuit, d'une dégradation physique du balai d'essuie-glace, voire dans la pire des hypothèses à un départ de feu.

L'invention vise à proposer une solution simple, efficace et économique à de tels problèmes inhérents aux conceptions selon l'état de la technique, sans avoir à faire appel à des moyens dédiés visant à assurer une protection thermique du balai d'essuie-glace.

### BREF RESUME DE L'INVENTION

L'invention propose un circuit électrique chauffant pour un balai d'essuie-glace d'un véhicule, en particulier automobile, comportant au moins un élément résistif chauffant qui est relié à des bornes d'alimentation électrique de l'élément,
caractérisé en ce qu'au moins un élément résistif chauffant est un élément résistif CTP réalisé au moyen d'une encre résistive à coefficient de température positif.

L'acronyme CTP signifie Coefficient de Température Positif pour désigner une caractéristique intrinsèque du matériau sélectionné qui est ici une encre dite CTP à coefficient de température positif. En anglais PTC pour "Positive Temperature Coefficient".

Ainsi, un élément résistif chauffant CTP possède une résistance électrique qui augmente avec l'accroissement de la température.

Un tel élément résistif chauffant CTP se distingue d'autres éléments chauffant dont la résistance électrique est sensiblement constante, un élément résistif chauffant CTP ayant la capacité de piloter la température par lui-même en régulant sa puissance de chauffage via sa résistance électrique en réponse à la température.

À basse température, sa résistance est inférieure et sa puissance de chauffage est ainsi plus grande en permettant notamment une augmentation rapide de la température. Lorsque la température augmente, la résistance de l'élément résistif chauffant CTP augmente en aboutissant ainsi à une réduction de sa puissance de chauffage.

Durant une courte période et pour certaines températures, la puissance de chauffage de l'élément résistif chauffant CTP peut diminuer jusqu'à un point auquel elle compense simplement la perte d'énergie du système, en maintenant une constante.

Ainsi, sans faire appel à des moyens spécifiques de pilotage - tels qu'un circuit électronique à modulation de largeur d'impulsions (ou circuit "PWM), l'intégration d'un circuit électrique chauffant selon l'invention dans un des composants du balai d'essuie-glace permet d'assurer une auto-régulation de la fonction de chauffage et une sécurité visant notamment à éviter toute dégradation du balai d'essuie-glace.

La conception selon l'invention, faisant appel à des éléments résistifs chauffant CTP réalisés par dépôt d'une encre CTP, est avantageuse par sa compacité, sa facilité d'intégration et sa facilité de mise en oeuvre.

Selon d'autres caractéristiques du circuit électrique chauffant :
- il comporte plusieurs éléments résistifs chauffant CTP qui sont reliés aux mêmes bornes d'alimentation électrique ;
- il comporte plusieurs éléments résistifs chauffant CTP qui sont reliés en parallèle aux mêmes bornes d'alimentation électrique ;
- il comporte deux conducteurs électriques de raccordement de chaque élément résistif chauffant CTP aux bornes d'alimentation électrique ;
- chaque conducteur électrique de raccordement est réalisé au moyen d'une encre conductrice de l'électricité ;
- chaque conducteur électrique de raccordement est une bande d'encre conductrice de l'électricité ; les deux bandes d'encre conductrice de l'électricité sont parallèles ; et chaque élément résistif chauffant est un pavé d'encre résistive à coefficient de température positif qui est agencé transversalement à cheval sur les deux bandes d'encre conductrice de l'électricité ;
- le circuit chauffant comporte :
   -- une portion comprenant une pluralité d'éléments résistifs chauffant CTP formant une première résistance de chauffage et de régulation ;
   -- et une autre portion formant une deuxième résistance de chauffage, montée en série avec la première résistance.

L'invention propose aussi un élément chauffant pour un balai d'essuie-glace d'un véhicule, en particulier automobile, caractérisé en ce qu'il comporte un support et au moins un circuit électrique chauffant selon l'invention qui est portée par le support.

Selon d'autres caractéristiques de l'élément chauffant :
- le support est une vertèbre, de rigidification et/ou de cintrage, d'un balai d'essuie-glace, et au moins une des deux faces opposées de la vertèbre porte, directement ou indirectement, au moins un élément résistif chauffant CTP ;
- la vertèbre porte, directement ou indirectement, au moins un élément résistif chauffant CTP sur chacune de ses deux faces opposées ;
- l'élément chauffant comporte une couche électriquement isolante interposée entre le support et chaque élément résistif chauffant CTP ;
- le support est une lame d'essuyage d'un essuie-glace destinée à frotter contre une vitre à essuyer ;
- le support est un déflecteur d'un essuie-glace destiné à améliorer la performance aérodynamique de l'essuie-glace ;
- le support est un substrat souple, de manière à réaliser l'élément chauffant sous la forme d'un film chauffant ;
- le support est réalisé dans un matériau électriquement conducteur ou dans un matériau non électriquement conducteur ;

L'invention propose encore un balai d'essuie-glace pour un véhicule automobile, caractérisé en ce qu'il comporte au moins un élément chauffant selon l'invention.

Selon une autre caractéristique du balai d'essuie-glace, il comporte des moyens de connexion ou d'adaptation à un bras d'entraînement du balai d'essuie-glace, c'est moyen de connexion comportant des moyens de raccordement électrique auxdites bornes d'alimentation électrique.

Enfin, l'invention propose un procédé de fabrication d'un élément électrique chauffant pour un balai d'essuie-glace de véhicule, en particulier automobile, cet élément comportant :
- au moins un circuit électrique chauffant comportant au moins un élément résistif chauffant CTP à coefficient de température positif qui est relié à des bornes d'alimentation électrique de l'élément ;
- et un support de cet élément résistif chauffant CTP, caractérisé en ce qu'il comprend au moins une étape a) consistant à réaliser chaque élément résistif chauffant CTP par dépôt sur le support d'une encre résistive à coefficient de température positif.

Selon d'autres caractéristiques du procédé :
- l'étape a) est précédée d'une étape b) de dépôt d'une couche électriquement isolante sur le support ;
- le procédé de réalisation d'un élément électrique chauffant qui comporte deux conducteurs électriques de raccordement de chaque élément résistif chauffant CTP aux bornes d'alimentation électrique, est caractérisé en ce que l'étape a) est précédée d'une étape c) de réalisation de chaque conducteur électrique par dépôt sur le support d'une encre conductrice de l'électricité ;
- ladite étape a) ou c) de dépôt d'une encre est réalisée par sérigraphie ;
- le support est réalisé dans un matériau électriquement conducteur ou dans un matériau non électriquement conducteur ;
- le procédé comporte une étape d) consistant à recouvrir au moins une partie du circuit électrique chauffant d'au moins une couche électriquement isolante de protection.

### BREVE DESCRIPTION DES FIGURES

D'autres caractéristiques et avantages de l'invention apparaitront au cours de la lecture de la description détaillée qui va suivre, faite à titre non limitatif et pour la compréhension de laquelle on se reportera aux dessins annexés dans lesquels :
- la figure 1 est une vue en perspective éclatée d'un balai d'essuie-glace de véhicule automobile ;
- la figure 2 est une vue schématique de dessus illustrant un exemple de réalisation d'un élément chauffant selon l'invention réalisé ici sous la forme d'un film chauffant apte à équiper une face d'une vertèbre de cintrage du balai d'essuie-glace de la figure 1 ;
- la figure 3 est une vue en section par un plan longitudinal et vertical selon la ligne 3-3 d'un tronçon de l'élément chauffant de la figure 2.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" des figures. On définit aussi un plan horizontal qui s'étend longitudinalement et transversalement.

L'orientation ou direction longitudinale correspond à l'axe principal du balai d'essuie-glace.

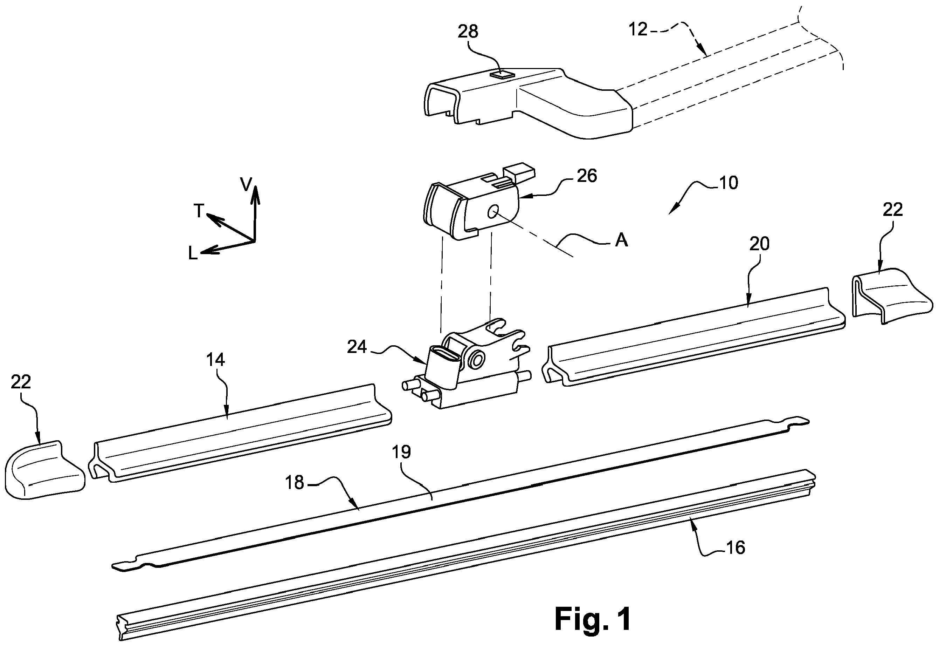

On a représenté à la figure 1 un balai d'essuie-glace 10, par exemple pour l'essuyage de la surface extérieure d'un pare-brise de véhicule automobile.

On a aussi représenté partiellement un bras 12 d'entraînement du balai d'essuie-glace 10 qui est lui-même destiné à être entraîné par un moteur électrique (non représenté) pour que le balai d'essuie-glace suive un mouvement angulaire alternatif de va-et-vient permettant d'évacuer de l'eau, et éventuellement d'autres éléments indésirables, présents sur la surface extérieure du pare-brise.

Le balai d'essuie-glace 10 comprend un corps longitudinal 14, une lame d'essuyage 16 et au moins une vertèbre 18 dont la fonction est de conférer à la lame d'essuyage 16 un cintrage de manière à favoriser l'application de la lame d'essuyage 16 sur la surface extérieure du pare-brise en fonction de la conformation géométrique en trois dimensions dans l'espace de cette surface extérieure.

Le corps longitudinal 14 du balai d'essuie-glace 10 comporte ici un déflecteur supérieur 20 qui est destiné à améliorer le fonctionnement du balai d'essuie-glace, le déflecteur 20 ayant pour fonction d'améliorer le plaquage de la lame d'essuyage 16 sur la surface extérieure du pare-brise et donc d'améliorer la performance aérodynamique de l'ensemble du système d'essuie-glace.

Le balai d'essuie-glace 10 comporte de plus des embouts ou agrafes 22 d'accrochage de la lame d'essuyage 16 et de la vertèbre 18 sur le corps longitudinal 14, les agrafes 22 étant ici situées à chacune des deux extrémités longitudinales opposées du corps longitudinal 14.

Le corps longitudinal 14 du balai d'essuie-glace 10 est ici réalisé en deux parties indépendantes qui sont disposées l'une par rapport à l'autre sensiblement bout-à-bout et qui sont raccordées l'une à l'autre par un connecteur intermédiaire 24.

Pour assurer le montage du balai d'essuie-glace 10 sur le bras d'essuie-glace 12, le balai 10 comprend un adaptateur 26 qui est monté sur le connecteur intermédiaire 24 et qui permet une articulation du balai d'essuie-glace 10 par rapport au bras 12.

L'articulation du balai d'essuie-glace 10 par rapport au bras d'essuie-glace 12 est une articulation selon un mouvement de pivotement autour d'un axe de pivotement A d'orientation transversale orthogonale à l'axe longitudinal du balai d'essuie-glace 10.

En effet, le balai d'essuie-glace 10 doit présenter au moins un degré de liberté en rotation ou pivotement par rapport au bras d'essuie-glace 12, et plus précisément par rapport à une pièce terminale ou distale 28 équipant l'extrémité libre du bras d'entraînement 12, pour permettre au balai d'essuie-glace 10 de suivre la courbure dans l'espace de la surface extérieure du pare-brise.

Selon l'invention, le balai d'essuie-glace 10 est équipé d'un élément chauffant, ou élément de chauffage, qui est essentiellement constitué d'un support et de composants assurant une fonction de résistance électrique de chauffage qui sont portés par le support, l'élément chauffant étant intégré au balai d'essuie-glace 10 et, dans la conception illustrée aux figures, destiné à équiper une face d'une vertèbre 18, et par exemple la face supérieure 19.

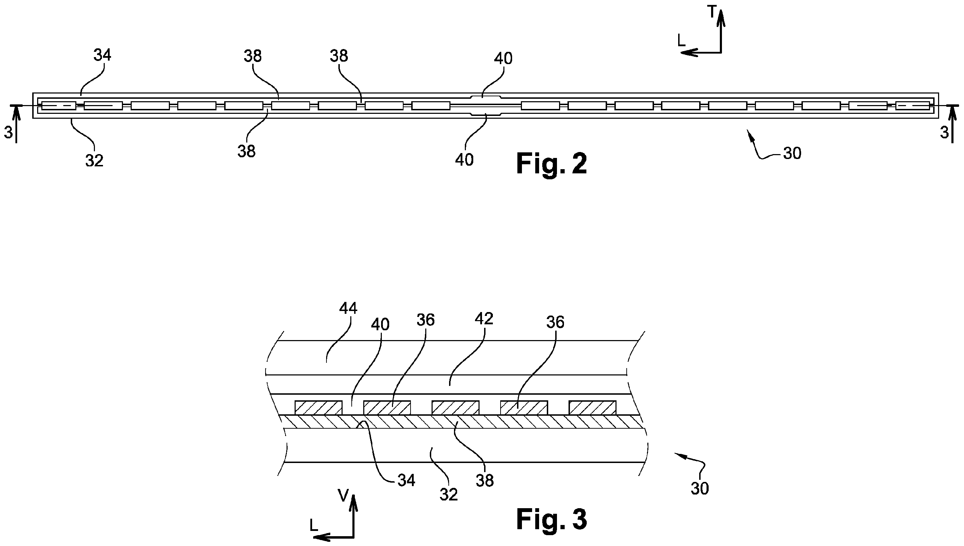

Comme on peut le voir notamment à la figure 2, l'élément chauffant 30 selon l'invention se présente ici sous la forme d'un film chauffant destiné à être rapporté sur une face 19 de la vertèbre de cintrage 18.

Le film chauffant 30 comporte un substrat inférieur 32 réalisé dans un matériau non conducteur de l'électricité qui est ici de forme générale rectangulaire dont les dimensions, longueur et largeur, sont telles qu'elles permettent l'adaptation et le montage du film chauffant 30 sur la vertèbre de cintrage 18 de dimensions déterminées.

Le substrat 32 est ainsi par exemple une feuille de matière plastique ou synthétique souple dont la constitution sera précisée par la suite.

Le substrat 32 peut comporter, sur sa face inférieure destinée à coopérer avec un élément du balai d'essuie-glace (par exemple avec la face supérieure 19 de la vertèbre 18), un revêtement adhésif de manière à permettre la fixation du film chauffant 30 par collage de ce revêtement adhésif, par exemple sur la vertèbre 18.

Le substrat 32 comporte une face supérieure libre 34 sur laquelle est réalisé un circuit électrique chauffant conforme aux enseignements de l'invention qui, dans cet exemple de réalisation, est composé uniquement d'éléments résistifs chauffant CTP.

Chaque élément résistif chauffant CTP est ici un pavé 36 d'encre à coefficient de température positif.

Chaque pavé CTP 36 est de contour rectangulaire et les pavés 36 sont au nombre de dix-huit alignés longitudinalement et juxtaposés de manière voisine, à l'exception de la partie centrale ou médiane de la longueur de l'élément chauffant 30 qui est ici une zone dépourvue d'éléments résistifs chauffant CTP. Ainsi, dans l'exemple illustré à la figure 2, le circuit électrique chauffant comporte deux groupes comportant chacun neuf éléments résistifs chauffant 36.

Le nombre d'éléments résistifs chauffant peut bien entendu varier, notamment en fonction de la longueur du balai d'essuie-glace et donc par exemple de la longueur de la vertèbre, et être répartis régulièrement ou non sur cette longueur.

Pour assurer le raccordement électrique de chaque pavé CTP 36 à une source d'énergie électrique, l'élément chauffant 30 comporte, ici à titre d'exemple, deux conducteurs électriques parallèles 38 chacun en forme d'une bande longitudinale qui s'étend sensiblement sur toute la longueur de l'élément chauffant 30.

À titre d'exemple de réalisation, chaque bande conductrice de l'électricité 38 est réalisée par dépôt sur la face supérieure 34 du substrat 32 d'une encre conductrice, par exemple à base d'argent (Ag).

Dans la partie centrale de l'élément chauffant 30, c'est-à-dire dans la zone qui ne comporte pas d'éléments résistif chauffant CTP, chaque bande conductrice de l'électricité 38 comporte une portion centrale élargie transversalement 40 qui constitue une borne de raccordement électrique de la bande correspondante 38.

La zone médiane dans laquelle sont situées les bornes de raccordement 40 peut par exemple correspondre à la position longitudinale du connecteur 26 de balai d'essuie-glace sur la vertèbre de cintrage 18.

En effet, de manière connue, le connecteur 26 peut comporter des moyens de raccordement électrique (non représentés) qui sont destinés à venir au contact des bornes de raccordement électrique 40 de l'élément chauffant 30 équipant la vertèbre de cintrage 18.

Par ailleurs, la connexion ou raccordement électrique entre les bornes de raccordement électrique 40 et une source d'alimentation en énergie électrique (non représentée) du véhicule est ensuite assurée, de manière connue, par exemple à travers l'adaptateur 26 puis le bras d'essuie-glace 30.

Tous les éléments résistifs chauffant ou pavés 36 sont reliés aux mêmes bornes d'alimentation électrique 40, ici selon un montage en parallèle.

À cet effet, chaque élément résistif chauffant 36 est disposé de manière à s'étendre transversalement à cheval sur chacune des bandes conductrices de l'électricité 38.

Chaque bande conductrice 38 constitue ainsi une « barre de raccordement électrique » aussi appelée « busbar ».

La réalisation d'une part des bandes conductrices de l'électricité 38 à base d'encre conductrice, et des éléments résistifs chauffant CTP 36, à base d'une encre CTP est par exemple effectuée par dépôt par sérigraphie.

Ce procédé de réalisation par dépôt de couches successives d'encre, s'effectue par exemple en procédant d'abord à une étape de dépôt des bandes conductrices de l'électricité 38, puis en procédant à une étape de dépôt des éléments résistifs chauffant CTP 36.

À titre de variante non représentée, il est aussi possible de procéder d'abord à la réalisation par dépôt des éléments résistifs chauffant CTP 36, puis à la réalisation par dépôt d'encre des bandes conductrices de l'électricité 38.

À la figure 2, on a représenté, de manière schématique, à grande échelle et sans respecter les dimensions relatives des différents composants, un tronçon de l'élément chauffant.

Le substrat inférieur 32 est par exemple réalisé en polyéthylène (PET).

Après réalisation par dépôt des bandes conductrices de l'électricité 38 et des éléments résistifs chauffant CTP 36, on peut recouvrir cet ensemble successivement d'une couche 41 protectrice, puis d'une couche 42 d'adhésif laminé, puis enfin, toujours à titre d'exemple, d'un « substrat » supérieur 44 de conception analogue à celle du substrat inférieur 32.

À titre d'exemple, les éléments résistifs chauffant CTP 36 peuvent être réalisés par dépôt par sérigraphie d'une encre à coefficient de température positif telle que commercialisée par la société "Henkel" (Marque déposée) sous la référence LOCTITE ECI 8000 (Marque déposée), ou encore par la société "Du Pont" (Marque déposée) sous la référence "7292".

Le principe d'autorégulation thermique, ou principe de protection contre les effets d'une surchauffe accidentelle, est basé sur le principe de la loi d'Ohm selon laquelle U=R*I, et P=I*U=R*I², dans laquelle U est la tension d'alimentation électrique, I est l'intensité du courant et R la valeur de la résistance, P étant la puissance fournie.

On peut considérer l'élément chauffant 30 de type CTP comme un élément chauffant « intelligent », sa résistance initiale R0 étant exprimée en Ohm/unité de surface (aire).

En fonction de l'application et de l'effet global de chauffage recherché, la résistance électrique efficace W d'un l'élément chauffant 30 peut être obtenue en déterminant un nombre d'éléments résistifs chauffant 36 et en les agençant selon un motif déterminé de raccordement(s) électrique(s).

Si N est le nombre d'éléments CTP 36, la puissance totale de chauffage est fonction de N*U²/R0 et elle peut aisément être adaptée en sélectionnant tout paramètre tel que la tension appliquée, le nombre total de pavés CTP 36 en parallèle, ainsi que leur(s) résistance(s) initiale(s) R0.

Selon une variante de réalisation non représentée, l'élément chauffant peut être réalisé « directement » sur la vertèbre de cintrage 18, celle-ci constituant alors, au sens de l'invention, le support du circuit électrique chauffant.

À cet effet, la face supérieure 19 joue alors le rôle de la face supérieure 34 du substrat 32.

Si la vertèbre de cintrage 18 est réalisée en métal de manière à bénéficier avantageusement d'un effet important de radiateur thermique, il faut alors - notamment préalablement au dépôt d'une encre conductrice de l'électricité pour réaliser les bandes conductrices de l'électricité 38 - revêtir la face supérieure 19 d'une couche non conductrice de l'électricité.

Bien entendu, si la vertèbre de cintrage 18 est elle-même réalisée dans un matériau non conducteur de l'électricité, il peut alors ne pas être nécessaire de prévoir le dépôt d'une couche de matériau non conducteur de l'électricité entre la face supérieure 19 et les bandes conductrices de l'électricité 38.

Les techniques mentionnées précédemment de dépôt par couches successives d'encres, par exemple par sérigraphie, peuvent bien entendu être utilisées dans le cas où la vertèbre 18 constitue elle-même le support au sens de l'invention.

À titre de variante non représentée, le support peut être constitué par une portion de surface de la lame d'essuyage 16 ou du déflecteur aérodynamique 20.

De même, lorsque l'élément chauffant est réalisé sous la forme d'un film chauffant autonome qui peut être rapporté sur un élément ou composant du balai d'essuie-glace, l'élément chauffant peut alors être fixé par collage sur une portion de surface de la lame d'essuyage 16 ou sur une portion de surface du déflecteur aérodynamique 20.

Un circuit de chauffage selon l'invention n'est pas nécessairement constitué en totalité par des éléments résistifs chauffant de type CTP.

En effet, le circuit électrique chauffant peut comporter une première portion, ou premier tronçon, comprenant une pluralité d'éléments résistifs chauffant CTP 36 comme expliqué précédemment - qui forment alors une première résistance de chauffage et de régulation de valeur R1 - et comporter une deuxième portion, ou deuxième tronçon, qui est par exemple une résistance électrique de chauffage « classique » qui est montée en série avec la première portion et dont la valeur est R2.

La puissance totale de chauffe est alors égale à U²/(R1+R2). Ainsi, au-delà d'un seuil prédéterminé de température, la résistance R1 de la première portion du circuit électrique chauffant va augmenter rapidement et donc la puissance, et donc le chauffage va diminuer ou se stabiliser.

Cette variante permet également une auto-régulation de l'élément chauffant autour d'une valeur de seuil défini.

## Revendications

1. Circuit électrique chauffant pour un balai d'essuie-glace (10) d'un véhicule, en particulier automobile, comportant au moins un élément résistif chauffant (36) qui est relié à des bornes (40) d'alimentation électrique de l'élément,
**caractérisé en ce que** au moins un élément résistif chauffant est un élément résistif CTP (36) réalisé au moyen d'une encre résistive à coefficient de température positif.

2. Circuit électrique chauffant selon la revendication 1, **caractérisé en ce qu'**il comporte plusieurs éléments résistifs chauffant CTP (36) qui sont reliés aux mêmes bornes (40) d'alimentation électrique.

3. Circuit électrique chauffant selon la revendication 2, **caractérisé en ce qu'**il comporte plusieurs éléments résistifs chauffant CTP (36) qui sont reliés en parallèle aux mêmes bornes (40) d'alimentation électrique.

4. Circuit électrique chauffant selon l'une quelconque des revendications 2 ou 3, **caractérisé en ce qu'**il comporte deux conducteurs électriques (38) de raccordement de chaque élément résistif chauffant CTP (36) aux bornes d'alimentation électrique.

5. Circuit électrique chauffant selon la revendication 4, **caractérisé en ce que** chaque conducteur électrique de raccordement (38) est réalisé au moyen d'une encre conductrice de l'électricité.

6. Circuit électrique chauffant selon la revendication 5, **caractérisé en ce que** :
- chaque conducteur électrique de raccordement (38) est une bande d'encre conductrice de l'électricité ;
- les deux bandes (38) d'encre conductrice de l'électricité sont parallèles ;
- et chaque élément résistif chauffant CTP (36) est un pavé d'encre résistive à coefficient de température positif qui est agencé transversalement à cheval sur les deux bandes (38) d'encre conductrice de l'électricité.

7. Circuit électrique chauffant selon l'une quelconque des revendications précédentes, **caractérisé en ce qu'**il comporte :
- une portion comprenant une pluralité d'éléments résistifs chauffant CTP (36) formant une première résistance (R1) de chauffage et de régulation ;
- et une autre portion formant une deuxième résistance (R2) de chauffage, montée en série avec la première résistance.

8. Elément chauffant (30) pour un balai d'essuie-glace d'un véhicule, en particulier automobile, **caractérisé en ce qu'**il comporte un support et au moins un circuit électrique chauffant selon l'une quelconque des revendications 1 à 7 qui est porté par le support.

9. Elément chauffant selon la revendication 8, **caractérisé en ce que** le support est une vertèbre (18), de rigidification ou de cintrage, d'un balai d'essuie-glace, et **en ce qu'**au moins une (19) des deux faces opposées de la vertèbre (18) porte, directement ou indirectement, au moins un élément résistif chauffant CTP (36).

10. Elément chauffant selon la revendication 8, **caractérisé en ce que** la vertèbre (18) porte, directement ou indirectement, au moins un élément résistif chauffant CTP (36) sur chacune de ses deux faces opposées.

11. Elément électrique chauffant selon la revendication 8, **caractérisé en ce qu'**il comporte une couche électriquement isolante interposée entre le support et chaque élément résistif chauffant CTP (36).

12. Elément chauffant selon la revendication 8, **caractérisé en ce que** le support est une lame d'essuyage (16) d'un essuie-glace destinée à frotter contre une vitre à essuyer.

13. Elément chauffant selon la revendication 8, **caractérisé en ce que** le support est un déflecteur (14) d'un essuie-glace destiné à améliorer la performance aérodynamique de l'essuie-glace.

14. Elément chauffant (30) selon la revendication 8, **caractérisé en ce que** le support est un substrat souple (32), de manière à réaliser l'élément chauffant sous la forme d'un film chauffant.

15. Balai d'essuie-glace (10) pour un véhicule, en particulier automobile, **caractérisé en ce qu'**il comporte au moins un élément chauffant (30) selon l'une quelconque des revendications 8 à 14.

16. Balai d'essuie-glace selon la revendication 15, **caractérisé en ce qu'**il comporte des moyens de connexion ou d'adaptation à un bras d'entraînement du balai d'essuie-glace, ces moyens de connexion comportant des moyens de raccordement électrique auxdites bornes (40) d'alimentation électrique.

17. Procédé de fabrication d'un élément électrique chauffant (30) pour un balai d'essuie-glace (10) de véhicule, en particulier automobile, cet élément comportant :
- au moins un circuit électrique chauffant comportant au moins un élément résistif chauffant CTP (36) à coefficient de température positif qui est relié à des bornes (40) d'alimentation électrique de l'élément ;
- et un support de cet élément résistif chauffant CTP (36), **caractérisé en ce qu'**il comprend au moins une étape a) consistant à réaliser chaque élément résistif chauffant CTP (36) par dépôt sur le support d'une encre résistive à coefficient de température positif.

18. Procédé selon la revendication 17, **caractérisé en ce que** l'étape a) est précédée d'une étape b) de dépôt d'une couche électriquement isolante sur le support.

19. Procédé selon l'une des revendications 17 ou 18 de réalisation d'un élément électrique chauffant (30) qui comporte deux conducteurs électriques (38) de raccordement de chaque élément résistif chauffant CTP (36) aux bornes (40) d'alimentation électrique,
**caractérisé en ce que** l'étape a) est précédée d'une étape c) de réalisation de chaque conducteur électrique (38) par dépôt sur le support d'une encre conductrice de l'électricité.

20. Procédé selon l'une quelconque des revendications 17 à 19, **caractérisé en ce que** ladite étape a) ou c) de dépôt d'une encre est réalisée par sérigraphie.

21. Procédé selon l'une quelconque des revendications 17 à 20, **caractérisé en ce que** le support est réalisé dans un matériau électriquement conducteur ou dans un matériau non électriquement conducteur.

22. Procédé selon l'une quelconque des revendications 17 à 20, **caractérisé en ce qu'**il comporte une étape d) consistant à recouvrir au moins une partie du circuit électrique chauffant d'au moins une couche électriquement isolante de protection.
